# EUROPÄISCHE PATENTSCHRIFT

(11) **EP 2 012 469 B1**
(45) Veröffentlichungstag und Bekanntmachung des Hinweises auf die Patenterteilung: **17.02.2010**
(21) Anmeldenummer: 08104559.3
(22) Anmeldetag: 27.06.2008
(51) Int. Cl.: H04L 12/40, H04L 12/26

(54) **Verfahren zum Betrieb eines Quasibusses für ein Personenschutzsystem, Steuergerät zur Ansteuerung eines Personenschutzsystems und Vorrichtung zur Übertragung von Daten von Sensoren über wenigstens einen Quasibus an ein Steuergerät zur Ansteuerung eines Personenschutzsystems**
Method for operating a quasi bus for a personal protection system, control device for controlling a personal protection system and device for transferring data from sensors through at least one quasi bus to a control device for controlling a personal protection system
Procédé de fonctionnement d'un quasi-bus pour un système de protection des personnes, appareil de commande destiné à la commande d'un système de protection des personnes et dispositif de transmission de données de capteurs vers un appareil de commande destiné à la commande d'un système de protection des personnes par au moins un quasi-bus

(30) Priorität: 24.01.2008 DE 102008005990; 03.07.2007 DE 102007030792
(43) Veröffentlichungstag der Anmeldung: 07.01.2009
(73) Patentinhaber: ROBERT BOSCH GMBH, 70442 Stuttgart (DE)
(72) Erfinder: Gunselmann, Christian, 65843, Sulzbach / Taunus (DE); Weiss, Timo, 70825, Korntal (DE); Schruellkamp, Michael, 74321, Bietigheim-Bissingen (DE)

(56) Entgegenhaltungen:
- WO-A-03/069843
- DE-A1- 19 813 922
- DE-A1-102005 014 783
- AUTOLIV, BOSCH, CONTINENTAL, SIEMENS VDO: "PSI5 Peripheral Sensor Interface for Automotive Applications V1.2" TECHNICAL SPECIFICATION, [Online] 14. Juni 2007 (2007-06-14), Seiten 0-36, XP002494553 Gefunden im Internet: URL:http://www.psi5.org/en/pool/pdf/psi5_s pecification_v12_070614.pdf> [gefunden am 2008-09-02]

## Beschreibung

### Stand der Technik

Die Erfindung betrifft ein Verfahren zum Betrieb wenigstens eines Quasibusses für ein Personenschutzsystem bzw. ein Steuergerät zur Ansteuerung von Personenschutzmitteln bzw. eine Vorrichtung zur Übertragung von Daten von Sensoren über wenigstens einen Quasibus an ein Steuergerät zur Ansteuerung eines Personenschutzsystems nach der Gattung der unabhängigen Patentansprüche.

Ein Quasibus für eine Airbagelektronik in einem Fahrzeug ist als PSI5-Standard bekannt. Dafür wurden verschiedene Patentanmeldungen eingereicht. So beschreibt DE 103 42 044 A1 eine sogenannte Daisy-Chain-Konfiguration, d. h. eine Hintereinanderschaltung von Sensoren gleichen oder unterschiedlichen Typs, die an ein Steuergerät zur Ansteuerung von Personenschutzmitteln angeschlossen sind. In DE 103 42 625 A1 ist eine alternative parallele Konfiguration eines solchen Quasibusses exemplarisch dargestellt. Hier sind die verschiedenen Sensoren parallel an das Steuergerät angeschlossen. Bei beiden Konfigurationen ist gleich, dass in vorgegebenen Zeitschlitzen die Sensoren an das Steuergerät ihre Daten übertragen. Die Sensoren werden über einen Synchronisationsimpuls zur Übertragung angeregt. Die Datenübertragung ist insgesamt synchron.

### Offenbarung der Erfindung

Aus WO 03/069843 ist ein Busmonitor bekannt, der eine fehlerhafte Busstation abschaltet. Dabei erfolgt eine Synchronisierung zu einem Ablaufplan. Dieser Ablaufplan wird vom Busmonitor geprüft, ob dieser entsprechenden Vorgaben genügt. Aus DE 19813 922 A1 ist ein komplexes Rückhaltesystem mit an einem Bus angeschlossenen Datenverarbeitungseinheiten bekannt. Auf dem Bus kann eine Kurzschlussstrommessung erfolgen. Dies kann durch eine Zeitmessung ergänzt werden. Zeigt die Zeitmessung, dass der Kurzschluss für eine längere Zeit vorliegt, erfolgt ein Reset. Kurzschlussmessung und die Zeitmessung kann durch eine zentrale Steuereinheit erfolgen.

Aus XP002494553, Autoliv, Bosch, Continental, Siemens VDO: "PSI5 Peripheral Sensor Interface For Automotive Applications V1.2" 14. Juni 2007, ist eine Busschnittstelle für Sensoranwendungen in Fahrzeugen bekannt.

Das erfindungsgemäße Verfahren zum Betrieb wenigstens eines Quasibusses für ein Personenschutzsystem, bzw. das erfindungsgemäße Steuergerät zur Ansteuerung eines Personenschutzsystems bzw. die erfindungsgemäße Vorrichtung zur Übertragung von Daten von Sensoren über wenigstens einen Quasibus an ein Steuergerät zur Ansteuerung eines Personenschutzsystems, haben demgegenüber den Vorteil, dass nunmehr eine effiziente Fehlerbehandlung vorgesehen ist, die es ermöglicht einen Teil der Sensoren am Bus weiterhin zu betreiben, die nicht defekt sind und der defekte Sensor vom Quasibus abgetrennt wird. Ansonsten könnte ein defekter Sensor den gesamten Quasibusbetrieb verhindern. Damit ist eine effiziente und einfache Fehlerbehandlung vorgesehen.

Das erfindungsgemäße Verfahren, bzw. das erfindungsgemäße Steuergerät bzw. die erfindungsgemäße Vorrichtung ermöglichen einen sicheren, zuverlässigen und effizienten Betrieb einer Airbagelektronik.

Vorliegend ist unter dem Begriff "Betrieb" das normale Betreiben eines Quasibusses zu verstehen, d. h. die Datenübertragung von den Sensoren zum Steuergerät.

Der wenigstens eine Quasibus, es können auch mehrere als einen Quasibus an ein Steuergerät angeschlossen sein, ermöglicht die Zusammenschaltung von vom Steuergerät ausgelagerten Sensoren wie Unfallsensoren oder Sitzbelegungssensoren oder Umfeldsensoren oder auch Ortungssensoren in einer einfachen und effizienten Weise. Charakteristisch für den Quasibus ist, dass die Sensoren nicht in Abhängigkeit von einem Anforderungsdatentelegramm eines Masters ihre Daten übertragen oder eine Arbitrierung durchgeführt wird, sondern die Sensoren übertragen ihre Daten in festgelegten Zeitschlitzen an das Steuergerät ohne Daten vom Steuergerät, außer beispielsweise einem Synchronisationsimpuls zu empfangen. Es besteht also kein Vollduplexbetrieb oder eine bidirektionale Kommunikation. Lediglich Einfachstsignale werden vom Steuergerät zum Sensor übertragen, während der Sensor komplexe digitale Daten an das Steuergerät überträgt. Es liegt damit eine starke Asymmetrie der Datenübertragung zwischen den Sensoren und dem Steuergerät vor.

Unter einem Personenschutzsystem sind passive und/oder aktive Personenschutzmittel zu verstehen. Zu den passiven Personenschutzmitteln zählen Airbags, Gurtstraffer, crashaktive Kopfstützen, Überrollbüge usw.. Zu den aktiven Personenschutzmitteln zählen Bremsen, eine Fahrdynamikregelung und andere ähnliche Maßnahmen. Der Begriff Personenschutzmittel ist vorliegend äquivalent zum Begriff des Personenschutzsystems zu verstehen.

Unter einem Steuergerät ist ein Gerät zu verstehen, das Sensordaten von Sensoren erhält, wobei sich diese Sensoren auch im Steuergerät befinden können, und das in Abhängigkeit von diesen Sensorsignalen ein Steuersignal erzeugt. Üblicherweise weist das Steuergerät ein Gehäuse aus Metall und/oder Kunststoff auf, wobei als Metall gerne Aluminium aufgrund seiner Leichtigkeit verwendet wird. Bei dem Steuergerät handelt es sich vorliegend beispielsweise um das Airbagsteuergerät oder ein allgemein konfiguriertes Sicherheitssteuergerät.

Ansteuern bedeutet vorliegend das Aktivieren des Personenschutzsystems.

Unter Sensoren sind vorliegend Unfallsensoren wie Beschleunigungs- und/oder Luftdrucksensoren, Umfeldsensoren, wie Radar, Lidar, Video oder Ultraschall zu verstehen.

Die Daten sind die Messdaten ergänzt um Fehlerschutz und einen Header.

Unter einem Fehlerbild können folgende Erscheinungen verstanden werden:
- Der defekte Sensor hat einen Kurzschluss zu den Versorgungsleitungen
- Der Zeitschlitz des defekten Sensors überschneidet sich mit dem eines intakten Sensors.
- Der defekte Sensor stört den Synchronisationsimpuls des Steuergeräts.
- Der defekte Sensor hat eine erhöhte Stromaufnahme, die zum Einbruch der Versorgungsspannung auf den Bus führt.

Diese Fehlerbilder können beispielsweise in Abhängigkeit von den empfangenen Daten erkannt werden. Die empfangenen Daten sind zum Großteil Nutzdaten, sie bergen jedoch auch Informationen über den Zustand des Sensors. Damit können dann die oben dargestellten möglichen Fehlerbilder identifiziert werden.

Unter einer Schnittstelle ist vorliegend ein integrierter Schaltkreis verstanden worden. Es ist jedoch alternativ möglich, dass die Schnittstelle zumindest zum Teil auf Software läuft. Eine weitere Möglichkeit ist eine Kombination aus integrierten und diskreten Schaltelementen. Der Auswertebaustein sowie der Fehlererkennungsbaustein, sowie der Reset-Baustein, sowie die Signalerzeugungsmittel können getrennte integrierte Schaltkreise sein, sie können aus einer Mischung von integrierten und diskreten Bauelementen aufgebaut sein, oder sie können als Softwaremodule vorliegen. Letzteres ist vorliegend der Fall.

Durch die in den abhängigen Ansprüchen aufgeführten Maßnahmen und Weiterbildungen sind vorteilhafte Verbesserungen des in den unabhängigen Patentansprüchen angegebenen Verfahrens zum Betrieb wenigstens eines Quasibusses für einen Personenschutzsystem des Steuergeräts zur Ansteuerung eines Personenschutzsystems und der Vorrichtung zur Übertragung von Daten von Sensoren über wenigstens einen Quasibus zu einem Steuergerät zur Ansteuerung eines Personenschutzsystems möglich.

Vorteilhaft ist, dass das Steuergerät anhand einer Übertragungsfehlerrate das Fehlerbild erkennt. D. h. wie fehlerhaft die übertragenen Sensordaten sind, kann darauf zurückzuführen sein, dass eines der oben genannten Fehlerbilder aufgetreten ist.

Es ist weiterhin vorteilhaft dass beim Neustart zunächst eine Energieversorgung für den Quasibus abgeschaltet und dann wieder eingeschaltet wird und dass dann den jeweiligen Sensoren ein geeigneter Zeitschlitz für die Datenübertragung zum Steuergerät mitgeteilt wird. Die Übertragungsfehlerrate ist ein einfacher und leicht messbarer Parameter.

Weiterhin ist es von Vorteil, dass der letzte Sensor durch einen Längstransistor getrennt wird. Ein Längstransistor ist vorteilhafterweise so angeordnet, dass lediglich durch die Betätigung eines Masseanschlusses der Sensor in der Lage ist, die nach ihm an das Steuergerät angeschlossenen Sensoren abzuklemmen. Der Längstransistor ist ein effektives und einfach anzusteuerndes Bauelement.

Vorteilhafterweise schaltet der vorhergehende Sensor in Abhängigkeit von einem Freigabesignal den nachfolgenden Sensor zum Quasibus zu. D. h. der nächste Sensor zum Steuergerät schaltet den übernächsten Sensor zu. Dafür ist ein Freigabesignal notwendig, dass das Steuergerät ausgibt. Dies kann beispielsweise ein hochfrequentes Signal oder eine Spannungsspitze sein.

Dieses Freigabesignal kann auch in der Weise verwendet werden, dass eine Trennung zwischen der Programmierung des Sensors und dem Ansteuern des Längstransistors erreicht wird. Dies ermöglicht nämlich, dass die Versorgungsspannung bzw. Masse nicht an einem defekten Sensor angelegt wird. Die Programmierung der Sensoreigenschaften wie der Bus-Slot, in dem der jeweilige Sensor sendet, kann über ein sogenanntes Synchronpulsmuster erreicht werden. Dieses Synchronpulsmuster beinhaltet auch, dann den Längstransistor durchzuschalten. Dabei kann dieses Muster getrennt übertragen werden oder auch in einem einzigen Programmierzyklus übermittelt werden. Dabei kann dann der gewünschte Transistorzustand über ein zusätzliches Bit oder mehrere Bits in diesem Muster übertragen werden.

Es ist weiterhin von Vorteil, dass das Fehlerbild bereits beim Einschalten erkannt wird. Das Steuergerät erkennt oben genannte Fehlerbilder anhand einer der folgenden Methoden oder einer Kombination aus diesen:
- Unterspannungserkennung auf der Busleitung
- Erkennung von Manchesterfehlern und Zeitschlitzverletzungen
- Erkennung von ausgebliebenen Daten (Lücken im Datenstrom)
- Ansprechen einer Strombegrenzung auf der Busleitung.

Vorteilhafterweise werden als die Sensoren zwei Beschleunigungssensoren und ein Luftdrucksensor verwendet. Das sind die ausgelagerten Sensoren einer Seite, beispielsweise ein Luftdrucksensor in der Seitentür, ein Beschleunigungssensor zu Plausibilisierung des Luftdrucksensors in der B-Säule und in der Upfrontposition, d. h. an der Fahrzeugfront. Ein weiterer Quasibus für die gegenüberliegende Fahrzeugseite ist dann notwendig, um das komplette System aufzubauen. Über einen Quasibus können auch Sitzbelegungssensoren, wie Sitzkraftsensoren an das Airbagsteuergerät angeschlossen sein.

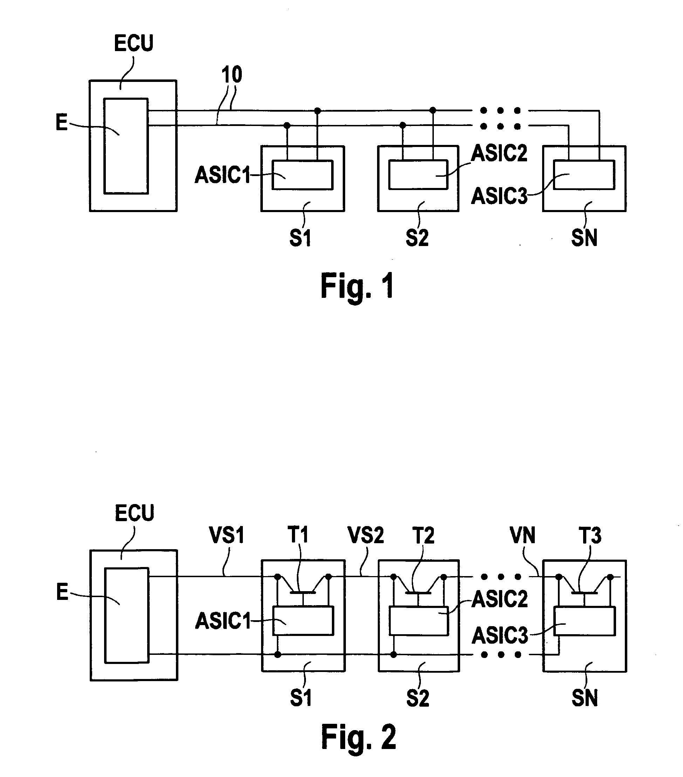

Ausführungsbeispiele der Erfindung sind in der Zeichnung dargestellt und werden in der nachfolgenden Beschreibung näher erläutert.
Es zeigen Figur 1
   eine parallele Konfiguration des Quasibusses,
Figur 2
   eine serielle Konfiguration des Quasibusses,
Figur 3
   ein Spannungszeitdiagramm,
Figur 4
   ein erfindungsrelevanter Teil des Steuergeräts,
Figur 5
   ein erstes Flussdiagramm und
Figur 6
   ein zweites Flussdiagramm.

Figur 1 erläutert in einem Blockschaltbild eine parallele Konfiguration des Quasibussystems. Es ist jeweils möglich, mehrere Quasibusse an das Steuergerät ECU anzuschließen und auch Punkt-zu-Punkt-Verbindungen von Sensoren zum Steuergerät zusätzlich vorzusehen. Je nach Anforderungsprofil kann die jeweilige Konfiguration gewählt werden.

Das Steuergerät ECU beherbergt eine Elektronik E, die die Kommunikation über den Quasibus 10 ermöglicht, der vorliegend als Zweileitungssystem ausgebildet ist. An den Bus 10 sind beispielhaft drei Sensoren S1, S2 und SN angeschlossen. Diese Sensoren weisen jeweils ASIC1, ASIC2 und ASIC3, also einen elektronischen Baustein auf, an den der Bus 10 angeschlossen ist. Damit ist die Kommunikation zwischen der Elektronik E und den jeweiligen Schaltkreisen Asic1, Asic2 und Asic3 der Sensoren S1, S2 und SN möglich.

Da das Steuergerät ECU über einen Synchronisationsimpuls über den Bus 10 die Sensoren S1, S2 und SN dazu veranlasst ihre Daten zu senden, ist klar, dass dieser Synchronisationsimpuls alle Sensoren S1, S2 bzw. SN mehr oder weniger zur gleichen Zeit erreicht. Daher muss den Sensoren S1, S2 und SN bereits vorher entweder eine Nummer oder gar der Zeitschlitz bekannt sein, in dem der jeweilige Sensor seine Daten überträgt. Über die voreingestellte Nummer ist es möglich, dass das Steuergerät ECU den einzelnen Sensoren S1, S2 und SN jeweils Zeitschlitze zuordnet. Dies kann sehr dynamisch geschehen, um veränderten Datenaufkommen frühzeitig entgegenwirken zu können.

Erfindungsgemäß erkennt die Elektronik E beispielsweise an den übertragenen Daten, ob ein Fehlerbild bei dem jeweiligen Sensor S1, S2 bzw. SN vorliegt. Dazu prüft das Steuergerät ECU mittels der Elektronik E beispielsweise die Übertragungsfehlerrate der empfangenen Daten. Sind die Daten so, dass überhaupt keine Daten mehr identifiziert werden können, dann spricht vieles dafür, dass ein Sensor die Übertragung aufgrund seines Fehlers erheblich stört. Um diesen Fehler zu begegnen wird die Erfindung eingesetzt. Dafür führt das Steuergerät ECU mittels der Elektronik E einen Neustart des Quasibusses 10 durch. Dafür wird zunächst die Spannung von der Busleitung 10 abgeschaltet und dann wieder hinzugeschaltet. Dies ist auch als Reset allgemein bekannt. In der Initialisierungsphase werden dann den einzelnen Sensoren S1, S2 und SN Zeitschlitze zugeordnet, wobei nunmehr der Sensor SN vom Quasibus getrennt wird und daher keinen Zeitschlitz erhält. Dafür wird die Elektronik ASIC3 derart veranlasst, den Sensor SN abzuschalten. Dieses Verfahren wird solange wiederholt, d. h. es werden solange Sensoren abgetrennt vom Quasibus, bis der defekte Sensor dabei ist. Dies kann natürlich dazu führen, wenn der erste Sensor S1 defekt ist, dass alle Sensoren abgetrennt werden. Aber dies ist ein Preis der vorliegend gezahlt wird.

Der Fehler eines einzelnen Sensors kann bereits in der Initialisierung erkannt werden. Dabei kann eine oder eine Kombination aus den oben beschriebenen Methoden zur Fehlerbilderkennung verwendet werden.

Figur 2 zeigt eine alternative Ausführungsform, nämlich die Daisy Chain-Konfiguration, d. h. die serielle Hintereinanderschaltung der einzelnen Sensoren S1, S2 und SN. Es werden wieder gleiche Bezugszeichen verwendet, bis auf die neuen Komponenten T1, T2 und T3, die als Längstransistoren vorliegend fungieren und dafür sorgen, dass der nachfolgende Sensor zum Quasibus hinzugeschaltet wird oder nicht. Die Spannungen VS1, VS2 und VN sind die Eingangsspannungen an den jeweiligen Sensoren. Hier liegt dann auch der Signalisierungsimpuls des Steuergeräts an, um den einzelnen Transistor T1, T2 zu veranlassen, den nachfolgenden Sensor zum Quasibus hinzuzuschalten. Nur wenn der nachfolgende Sensor geplantermaßen abgeschaltet werden soll, wie es erfindungsgemäß vorgesehen ist, dann bleibt der Längstransistor T1 oder T2 geöffnet. Varianten die auch für Figur 1 vorgestellt worden sind, sind auch für Figur 2 möglich.

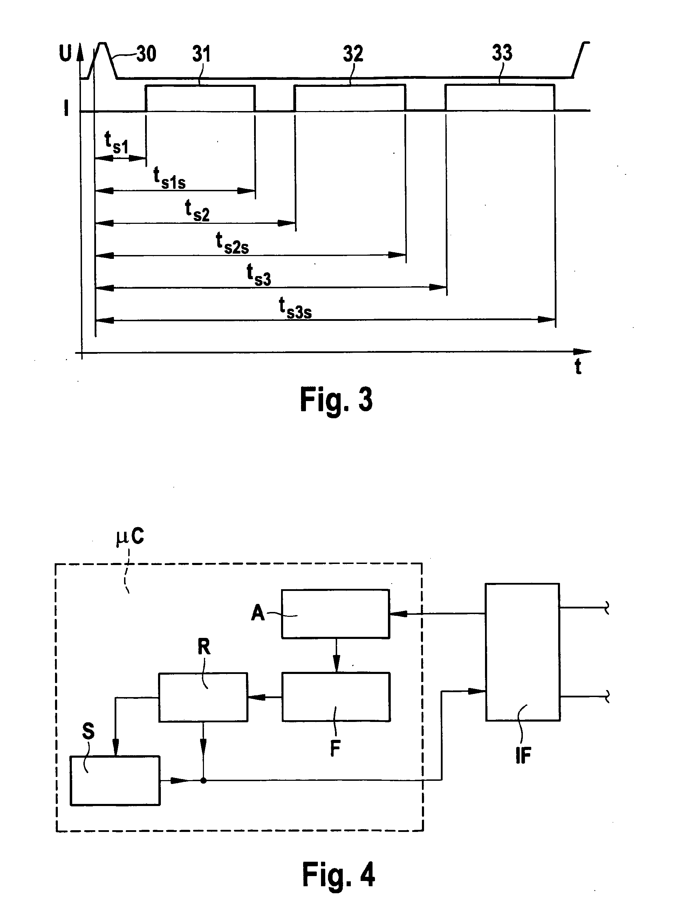

Figur 3 zeigt in einem Spannungszeitdiagramm die Zeitschlitze, die den einzelnen Sensoren zugeordnet sind. Hierbei sind dem ersten Sensor der Zeitschlitz 31, der zweite Sensor dem Zeitschlitz 32 und der dritte Sensor dem Zeitschlitz 33 zugeordnet. Die entsprechenden Zeiten, die den Beginn des Zeitschlitzes und das Ende anzeigen, sind entsprechend angegeben. t_{S1} zeigt den Beginn des Zeitschlitzes 31 und t_{S1S} das Ende. Entsprechend t_{S2} den Beginn des zweiten Schlitzes 32 und t_{S2S} das Ende des zweiten Zeitschlitzes 32. t_{S3} zeigt den Beginn des dritten Zeitschlitzes 33 und t_{S3S} das Ende des dritten Zeitschlitzes. Die Zeitschlitze bzw. Datenpakete 31, 32, 33 sind innerhalb eines Abschnittes zwischen zwei Synchronisationsimpulsen. Der Synchronisationsimpuls ist durch das Bezugszeichen 30 gekennzeichnet.

Figur 4 zeigt in einem Blockschaltbild die relevanten Teile des Steuergeräts SG. Die anderen, ebenfalls für den Betrieb des Steuergeräts SG notwendigen Teile sind der Einfachheit halber weggelassen worden. Über ein Schnittstellenbaustein IF, beispielsweise einen integrierten Baustein, ist der Quasibus an das Steuergerät angeschlossen. Der Schnittstellenbaustein ist über Datenein- und Ausgänge mit einem Mikrokontroller µC verbunden, der mehrere Module A, F, R und S aufweist, die erfindungsgemäße Funktionen ausführen. Die Module sind vorliegend als Softwaremodule ausgebildet, es ist jedoch möglich sie als Hardware oder Hardware in Verbindung mit Software auszubilden. Das Modul A ist das Auswertemodul und stellt die Daten für den Auslösealgorithmus für das Personenschutzsystem zur Verfügung. Das Modul F ist das Fehlererkennungsmodul. Es erkennt die Fehler und gibt dieses Ergebnis weiter an das Reset-Modul R, das ein Reset ausführt. Dafür wird auch nach wenigen Sekunden Signalisierungsmittel S aktiviert, um ein entsprechendes Signal an die Schnittstelle IF abzubilden.

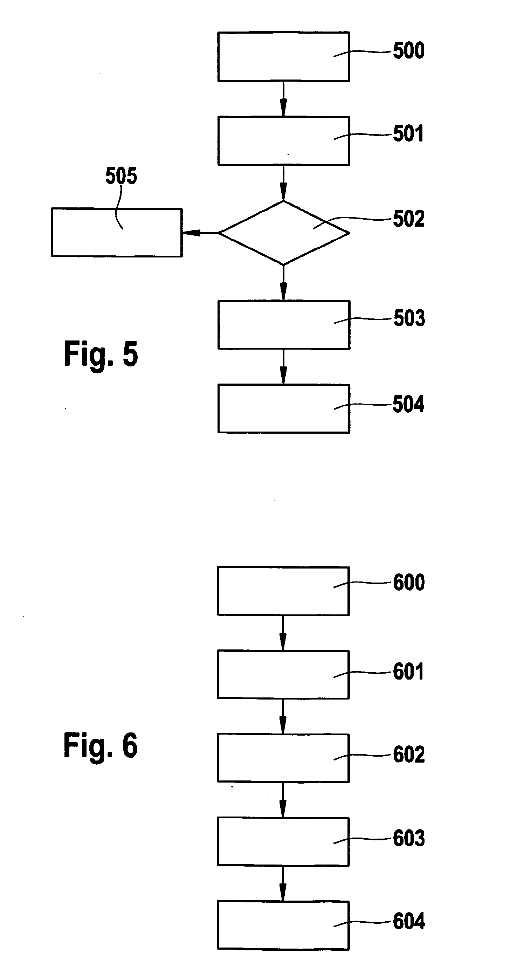

Figur 5 zeigt einen ersten Flussdiagramm des erfindungsgemäßen Verfahrens. In Verfahrensschritt 500 werden die Daten der Sensoren S1, S2 bis SN empfangen. Im Verfahrensschritt 501 erfolgt die Fehlerbildsuche. War diese erfolgreich, so wird dies in Verfahrensschritt 502 geprüft. Kommt der Verfahrensschritt 502 dazu, dass ein Fehlbild vorliegt, dann wird der Verfahrensschritt 503 in der oben beschriebenen Weise das Reset durchgeführt und im Verfahrensschritt 504 das Trennsignal an den Längstransistor abgegeben, der damit den letzten Transistor und Sensor abklemmt.

Wurde jedoch in Verfahrensschritt 502 erkannt, dass kein Fehlerbild vorliegt, dann beginnt in Verfahrensschritt 505 die Datenverarbeitung.

Figur 6 zeigt eine Alternative hierzu. Im Verfahrensschritt 600 wird der Neustart durchgeführt. Während dem Neustart wird der Verfahrensschritt 601 beim Zuschalten der einzelnen Sensoren ein defekter Sensor erkannt. Dies wird im Verfahrensschritt 602 abgespeichert. Verfahrensschritt 603 erfolgt ein erneuter Neustart. Im Verfahrensschritt 604 werden dann jedoch nur die Sensoren n-1 hinzugeschaltet und der letzte Sensor bleibt weg.

Nachfolgend wird ein weiteres Beispiel einer Programmierung von drei Sensoren an einem Daisy-Chain-Bus gegeben. Die Annahme dabei ist, dass der dritte Sensor am Kabelbaum in der Form defekt ist, dass er stets auf Bus-Slot 3 sendet, unabhängig von der Daisy-Chain-Programmierung.

Der Mikrocontroller im Steuergerät überträgt folgende Kommandos, codiert als Synchronpulsmuster:
1. Programmierung des ersten Sensors am Kabelbaum auf Slot 3
2. Freigeben des Längstransistors (separates Kommando oder kombiniert mit Kommando 1)
3. Programmierung des zweiten Sensors am Kabelbaum auf Slot 1
4. Freigeben des Längstransistors (separates Kommando oder kombiniert mit Kommando 3)
5. Programmierung des dritten Sensors am Kabelbaum auf Slot 2

Der Mikrocontroller erkennt, dass die Kommunikation gestört ist, denn Sensor 1 und Sensor 3 senden ihre Antworten auf demselben Slot 3. Daraufhin schaltet der Mikrocontroller die Spannung des betroffenen Kabelbaums aus und programmiert die Sensoren erneut mit Ausnahme des dritten Sensors.
6. Programmierung des ersten Sensors am Kabelbaum auf Slot 3
7. Freigeben des Längstransistors (separates Kommando oder kombiniert mit Kommando 6)
8. Programmierung des zweiten Sensors am Kabelbaum auf Slot 1
9. Sperren des Längstransistors (dieses Kommando ist nur notwendig, wenn die Transistorfreigabe als separates Kommando erfolgt, sonst entfällt Kommando 9 und die Programmierung ist abgeschlossen).

Die Programmierung ist abgeschlossen. Sensor 1 (Slot 3) und Sensor 2 (Slot 1) sind aktiviert. Sensor 3 ist über den gesperrten Längstransistor von Sensor 2 deaktiviert. Am Sensor liegt demnach keine Spannung an.

## Patentansprüche

1. Verfahren zum Betrieb wenigstens eines Quasibusses (10) für ein Personenschutzsystem, wobei an ein Steuergerät (ECU) zur Ansteuerung eines Personenschutzsystems der Quasibus (10) mit Sensoren zur Synchronübertragung von Daten, die Nutzdaten und Informationen über einen Zustand des jeweiligen Sensors sind, an das Steuergerät angeschlossen wird, wobei im Betrieb die jeweiligen Sensoren (S1, S2, SN) die jeweiligen Daten im Steuergerät (ECU) im jeweiligen Zeitschlitz (31 bis 33) übertragen, wobei das Steuergerät (ECU) einen Synchronisationsimpuls zu den Sensoren überträgt, um die Sensoren (S1, S2, SN) zur Übertragung der Daten anzuregen, ohne einen Vollduplexbetrieb oder eine bidirektionale Kommunikation zu verwenden, **dadurch gekennzeichnet, dass** das Steuergerät (ECU) in Abhängigkeit von den empfangenen Daten ein Fehlerbild erkennt und in Abhängigkeit von dem Fehlerbild ein Neustart des Quasibusses (10) durch das Steuergerät (ECU) durchgeführt wird und der letzte Sensor am Quasibus für den Betrieb abgetrennt wird.

2. Verfahren nach Anspruch 1, **dadurch gekennzeichnet, dass** das Steuergerät (SG) anhand einer Übertragungsfehlerrate das Fehlerbild erkennt.

3. Verfahren nach Anspruch 1 oder 2, **dadurch gekennzeichnet, dass** bei Neustart zunächst Energieversorgung für den Quasibus (10) abgeschaltet und dann wieder eingeschaltet wird und dass dann den jeweiligen Sensoren (S1, S2, SN) ein jeweiliger Zeitschlitz für die Datenübertragung mit dem Steuergerät mitgeteilt wird.

4. Verfahren nach einem der vorhergehenden Ansprüche, **dadurch gekennzeichnet, dass** der letzte Sensor durch einen Längstransistor getrennt wird.

5. Verfahren nach einem der vorhergehenden Ansprüche, **dadurch gekennzeichnet, dass** der vorhergehende Sensor in Abhängigkeit von einem Freigabesignal einen nachfolgenden Sensor zum Quasibus (10) zuschaltet.

6. Verfahren nach Anspruch 5, **dadurch gekennzeichnet, dass** das Fehlerbild bereits beim Einschalten erkannt wird.

7. Steuergerät zur Ansteuerung von Personenschutzmitteln mit:
- einer Schnittstelle (IF), die einen Anschluss eines Quasibusses (10) mit Sensoren zur Synchronübertragung von Daten, die Nutzdaten und Informationen über einen Zustand des jeweiligen Sensors sind, ermöglicht;
- einem Auswertebaustein, der die jeweiligen Daten der jeweiligen Sensoren in jeweiligen Zeitschlitzen für eine weitere Verarbeitung erwartet und verarbeitet, wobei das Steuergerät (ECU) einen Synchronisationsimpuls zu den Sensoren überträgt, um die Sensoren (S1, S2, SN) zur Übertragung der Daten anzuregen, ohne einen Vollduplexbetrieb oder eine bidirektionale Kommunikation zu verwenden, **dadurch gekennzeichnet, dass** ein Fehlererkennungsbaustein (F) vorgesehen ist, der ein Fehlerbild anhand der empfangenen Daten erkennt, dass ein Resetbaustein (R) vorgesehen ist, der in Abhängigkeit von einem Signal des Fehlererkennungsbausteins (F) einen Neustart des Quasibusses (10) durchführt, und dass ein Signalerzeugungsmittel vorgesehen ist, das ein Trennsignal zum Abtrennen des letzten Sensors an Quasi bus nach dem Neustart auf den Quasibus (10) ausgibt.

8. Steuergerät nach Anspruch 7, **dadurch gekennzeichnet, dass** der Fehlererkennunsgbaustein (F) das Fehlerbild aufgrund empfangener Daten und/oder während des Neustarts erkennt.

9. Vorrichtung zur Übertragung von Daten, die Nutzdaten und Informationen über einen Zustand des jeweiligen Sensors sind, von Sensoren (S1, S2, SN) über wenigstens einen Quasibus (10) an ein Steuergerät (SG) zur Ansteuerung eines Personenschutzsystems, wobei die jeweiligen Sensoren (S1, S2, SN) in jeweiligen Zeitschlitzen ihre Daten an das Steuergerät (SG) übertragen, wobei das Steuergerät (ECU) einen Synchronisationsimpuls zu den Sensoren überträgt, um die Sensoren (S1, S2, SN) zur Übertragung der Daten anzuregen, ohne einen Vollduplexbetrieb oder eine bidirektionale Kommunikation zu verwenden, **dadurch gekennzeichnet, dass** das Steuergerät in Abhängigkeit von den empfangenen Daten ein Fehlerbild erkennt und in Abhängigkeit von dem Fehlerbild einen Neustart des Quasibusses durch das Steuergerät durchgeführt wird und der letzte Sensor am Quasibus für den Betrieb abgetrennt wird.

10. Vorrichtung nach Anspruch 9, **dadurch gekennzeichnet, dass** die Sensoren (S1, S2, SN) zwei Beschleunigungssensoren in einem Luftdrucksensor sind.

## Claims

1. Method for operating at least one quasi bus (10) for a personal protection system, the quasi bus (10) with sensors for synchronously transmitting data, which are useful data and information relating to a state of the respective sensor, to a control device (ECU) for controlling a personal protection system being connected to the control device, the respective sensors (S1, S2, SN) transmitting the respective data to the control device (ECU) in the respective time slot (31 to 33) during operation, the control device (ECU) transmitting a synchronization pulse to the sensors in order to excite the sensors (S1, S2, SN) to transmit the data without using full duplex operation or bidirectional communication, **characterized in that** the control device (ECU) detects an error pattern on the basis of the received data and the control device (ECU) restarts the quasi bus (10) on the basis of the error pattern, and the last sensor on the quasi bus is disconnected for operation.

2. Method according to Claim 1, **characterized in that** the control device (SG) detects the error pattern using a transmission error rate.

3. Method according to Claim 1 or 2, **characterized in that**, in the event of a restart, the power supply for the quasi bus (10) is first of all switched off and is then switched on again, and **in that** the respective sensors (S1, S2, SN) are then informed of a respective time slot for transmitting data to the control device.

4. Method according to one of the preceding claims, **characterized in that** the last sensor is separated by a series transistor.

5. Method according to one of the preceding claims, **characterized in that** the preceding sensor connects a subsequent sensor to the quasi bus (10) on the basis of an enable signal.

6. Method according to Claim 5, **characterized in that** the error pattern is already detected during the switch-on operation.

7. Control device for controlling personal protection means, having:
- an interface (IF) which makes it possible to connect a quasi bus (10) with sensors for synchronously transmitting data which are useful data and information relating to a state of the respective sensor;
- an evaluation module which expects the respective data from the respective sensors in respective time slots for further processing and processes said data, the control device (ECU) transmitting a synchronization pulse to the sensors in order to excite the sensors (S1, S2, SN) to transmit the data without using full duplex operation or bidirectional communication, **characterized in that** provision is made of an error detection module (F) which detects an error pattern using the received data, **in that** provision is made of a reset module (R) which restarts the quasi bus (10) on the basis of a signal from the error detection module (F), and **in that** provision is made of a signal generating means which outputs a disconnect signal for disconnecting the last sensor on the quasi bus to the quasi bus (10) after the restart.

8. Control device according to Claim 7, **characterized in that** the error detection module (F) detects the error pattern on the basis of received data and/or during the restart.

9. Device for transmitting data, which are useful data and information relating to a state of the respective sensor, from sensors (S1, S2, SN) to a control device (SG) for controlling a personal protection system via at least one quasi bus (10), the respective sensors (S1, S2, SN) transmitting their data to the control device (SG) in respective time slots, the control device (ECU) transmitting a synchronization pulse to the sensors in order to excite the sensors (S1, S2, SN) to transmit the data without using full duplex operation or bidirectional communication, **characterized in that** the control device detects an error pattern on the basis of the received data and the control device restarts the quasi bus on the basis of the error pattern, and the last sensor on the quasi bus is disconnected for operation.

10. Device according to Claim 9, **characterized in that** the sensors (S1, S2, SN) are two acceleration sensors in an air pressure sensor.

## Revendications

1. Procédé de gestion d'au moins un quasi-bus (10) pour système de protection des personnes, le quasi-bus (10) doté de détecteurs de transmission synchronisée de données qui sont des données utiles et des informations concernant l'état de chaque détecteur étant raccordé à un appareil de commande (ECU) qui commande un système de protection des personnes, les différents détecteurs (S1, S2, SN) transmettant en fonctionnement les données correspondantes à l'appareil de commande (ECU) dans des fenêtres temporelles respectives (31 à 33),
l'appareil de commande (ECU) transmettant une impulsion de synchronisation aux détecteurs pour amener les détecteurs (S1, S2, SN) à transmettre les données sans qu'ils utilisent un fonctionnement en duplex plein ou une communication bidirectionnelle,
**caractérisé en ce que**
l'appareil de commande (ECU) reconnaît une situation erronée en fonction des données reçues et
**en ce qu'**en fonction de la situation erronée, un nouveau démarrage du quasi-bus (10) est exécuté par l'appareil de commande (ECU), le dernier détecteur du quasi-bus étant séparé pour le fonctionnement.

2. Procédé selon la revendication 1, **caractérisé en ce que** l'appareil de commande (SG) reconnaît une situation erronée à l'aide d'un taux d'erreur de transmission.

3. Procédé selon les revendications 1 ou 2, **caractérisé en ce que** lors d'un nouveau démarrage, l'alimentation en énergie du quasi-bus (10) est d'abord débranchée pour être ensuite rebranchée et **en ce qu'**une fenêtre temporelle respective de transfert de données avec l'appareil de commande est ensuite attribuée à chacun des détecteurs (S1, S2, SN).

4. Procédé selon l'une des revendications précédentes, **caractérisé en ce que** le dernier détecteur est séparé par un transistor longitudinal.

5. Procédé selon l'une des revendications précédentes, **caractérisé en ce que** le détecteur précédent raccorde un détecteur suivant au quasi-bus (10) en fonction d'un signal de libération.

6. Procédé selon la revendication 5, **caractérisé en ce que** la situation erronée est détectée dès le débranchement.

7. Appareil de commande destiné à commander des moyens de protection des personnes et présentant:
- une interface (IF) qui permet de raccorder un quasi-bus (10) à des détecteurs pour la transmission synchronisée de données qui sont des données utiles et des informations sur l'état de chaque détecteur,
- un module d'évaluation qui attend les différentes données des différents détecteurs dans des fenêtres temporelles différentes en vue de la poursuite de leur traitement et qui les traite,
l'appareil de commande (ECU) transmettant aux détecteurs une impulsion de synchronisation pour amener les détecteurs (S1, S2, SN) à transmettre les données sans qu'ils utilisent un fonctionnement en duplex plein ou une communication bidirectionnelle,
**caractérisé en ce que**
il présente un module (F) de détection d'erreur qui détecte une situation erronée à l'aide des données reçues,
**en ce qu'**il présente un module de réinitialisation (R) qui exécute un nouveau démarrage du quasi-bus (10) en fonction d'un signal du module de détection d'erreur (F) et
**en ce qu'**il présente un moyen de formation de signaux qui, après le nouveau démarrage, délivre sur le quasi-bus (10) un signal de séparation qui sépare le dernier détecteur du quasi-bus.

8. Appareil de commande selon la revendication 7, **caractérisé en ce que** le module (F) de détection d'erreur détecte une situation erronée sur base des données reçues et/ou pendant le nouveau démarrage.

9. Dispositif de transmission de données qui sont des données utiles et des informations concernant l'état de chaque détecteur entre des détecteurs (S1, S2, SN) et un appareil de commande (SG) par au moins un quasi-bus (10) pour commander un système de protection de personnes,
les différents détecteurs (S1, S2, SN) transmettant leurs données à l'appareil de commande (SG) par des fenêtres temporelles respectives,
l'appareil de commande (ECU) transmettant aux détecteurs une impulsion de synchronisation qui amène les détecteurs (S1, S2, SN) à transmettre les données sans qu'ils utilisent un fonctionnement en duplex plein ou une communication bidirectionnelle,
**caractérisé en ce que**
l'appareil de commande détecte une situation erronée en fonction des données reçues et
**en ce qu'**en fonction de la situation erronée, l'appareil de commande exécute un nouveau démarrage du quasi-bus, le dernier détecteur du quasi-bus étant séparé pour le fonctionnement.

10. Dispositif selon la revendication 9, **caractérisé en ce que** les détecteurs (S1, S2, SN) sont deux détecteurs d'accélération dans un détecteur de pression d'air.
